## Europäisches Patentamt
## European Patent Office
## Office européen des brevets

(19)

(11) Veröffentlichungsnummer: **0 214 149**
**B1**

(12) **EUROPÄISCHE PATENTSCHRIFT**

(45) Veröffentlichungstag der Patentschrift:
**14.06.89**

(21) Anmeldenummer: **86900145.3**

(22) Anmeldetag: **21.12.85**

(86) Internationale Anmeldenummer:
**PCT/EP 85/00736**

(87) Internationale Veröffentlichungsnummer:
**WO 86/04392 (31.07.86 Gazette 86/17)**

(51) Int. Cl.⁴: **F 03 D 7/02, F 03 D 11/00**

(54) **ROTOR EINER WINDKRAFTANLAGE.**

(30) Priorität: **18.01.85 CH 223/85**

(43) Veröffentlichungstag der Anmeldung:
**18.03.87 Patentblatt 87/12**

(45) Bekanntmachung des Hinweises auf die Patenterteilung:
**14.06.89 Patentblatt 89/24**

(84) Benannte Vertragsstaaten:
**GB IT**

(56) Entgegenhaltungen:
**FR-A- 1 117 788**
**GB-A- 2 073 328**
**NL-A- 7 801 830**
**US-A- 3 640 643**

(73) Patentinhaber: **SULZER-ESCHER WYSS GMBH, Escher Wyss-Strasse 25 Postfach 1380, D-7980 Ravensburg (DE)**

(72) Erfinder: **KISS, Stefan, Greut 29, D-7981 Waldburg (DE)**

(74) Vertreter: **Gubler, Hans et al, Gebrüder Sulzer AG KSR/Patente, CH-8401 Winterthur (CH)**

ACTORUM AG

## Patentansprüche

Die Erfindung betrifft einen Rotor einer Windkraftanlage, wie er im Oberbegriff des Anspruchs 1 beschrieben ist.

Die Flügel derartiger Rotoren sind im Betrieb grossen Fliehkräften ausgesetzt, welche im Bereich der Nabe aufgenommen werden. Die Nabe muss daher entsprechend stark ausgebildet werden, ist gross, teuer und in der Windströmung strömungstechnisch ungünstig.

Eine Möglichkeit, die Fliekräfte aufzunehmen, ohne mit ihnen die Nabe zu belasten, ist aus der FR-A-11 17 788 (1.add.no.6852 zu no.11 17 788) bekannt. Danach sind die Rotorflügel miteinander durch einen zur Drehachse des Rotors senkrecht stehenden Stab verbunden und um ihre senkrecht zur Rotorachse stehende Achse auf ebenen kreisringförmigen Axiallagern drehbar einstellbar. Eine Neigung der Flügel im Sinne einer Pfeilung bei Erhaltung ihrer Drehbarkeit um ihre Achse ist jedoch nicht möglich. Diese Konstruktion wird ausserdem durch Verformung der Nabe infolge der durch den Wind auftretenden Kräfte sehr ungünstig belastet, weil die Richtung dieser Kräfte von der Längsrichtung des Verbindungsstabes abweicht. Beispielsweise kann dadurch eine sehr hohe Flächenpressung auf den Axiallagerflächen entstehen, was zu erhöhter Reibung oder gar Beschädigung der Lagerflächen führen kann.

Die Erfindung hat die Schaffung eines Rotors dieser Art zum Ziel, dessen Nabe einerseits von den Fliehkräften entlastet ist und daher kleiner, leichter und mit den geringeren Kosten gebaut werden kann, und andererseits eine Drehbarkeit der Flügel um ihre Achse gestattet, wobei eine geringfügige Neigung der Flügel im Sinne einer Pfeilung zugelassen ist, ohne dass dabei an den Bauteilen der Konstruktion eine ungünstige oder schädliche Belastung auftreten kann.

Der erfindungsgemässe Rotor, durch welchen dieses Ziel erreicht wird, ist dadurch gekennzeichnet, dass zwischen den Enden des Verbindungsstabes und den Lagerzapfen Lager mit kugeligen Flächen angeordnet sind, welche eine Drehung und einen bestimmten Neigungswinkel der Flügel gegenüber dem Verbindungsstab gestatten.

Durch den Verbindungsstab werden die Fliehkräfte beider Flügel gegenseitig ausgeglichen, so dass die Nabe nur das Gewicht der Flügel und die Kraftkomponenten von der Windkraft aufzunehmen hat.

Vorzugsweise kann der Verbindungsstab von einer rohrförmigen Büchse umgeben sein, mit deren Hilfe er durch eine Zugkraft vorgespannt ist. Dadurch wird die Dauerfestigkeit des Verbindungsstabes wesentlich erhöht, welcher im Betrieb unter dem Einfluss von Schwerkraft einer pulsierenden Belastung ausgesetzt ist.

Dabei kann weiter vorzugsweise der Zwischenraum zwischen dem Verbindungsstab und der Büchse mit vor Korrosion schützendem Schmierfett versehen sein. Dadurch wird die Gefahr von Korrosion der Oberfläche des Verbindungsstabes vermindert, welche eine Verminderung der Dauerfestigkeit zur Folge hätte.

Eine besonders günstige, bevorzugte Ausbildung des Verbindungsstabes mit der Büchse und den Lagern wird auf die Weise erhalten, dass der Verbindungsstab an seinen Enden mit Gewinden versehen ist, auf welchen Gewinderinge aufgeschraubt sind, welche sich über die inneren Ringe der Lager, die mit kugeligen Flächen versehen sind, auf den Enden der Büchse abstützen.

Dabei können vorzugsweise die mit den Innenringen der Lager mit kugeligen Flächen zusammenwirkenden Aussenringe auf weiteren Gewinderingen abgestützt sein, die in Gewindebohrungen eingeschraubt sind, welche in den Lagerzapfen ausgebildet sind.

Die Lager mit kugeligen Flächen können Kalottenlager mit kugeligen Gleitflächen der Lagerringe sein. Es versteht sich jedoch, dass auch entsprechende, eine Neigung der Achsen zulassende Wälzlager, sogenannte Pendelrollenlager, an ihrer Stelle verwendet werden können.

Die Erfindung wird anhand eines in der Zeichnung schematisch dargestellten bevorzugten Ausführungsbeispieles erläutert. Es zeigt:

Fig. 1 eine Gesamtansicht einer Windkraftanlage mit dem erfindungsgemässen Rotor,

Fig. 2 einen Ausschnitt aus der Fig. 1 mit Teilschnitt in grösserem Massstab,

Fig. 3 den Schnitt III-III aus der Fig. 2, und

Fig. 4 einen Schnitt eines Teiles der Nabe aus der Fig. 2 nochmals vergrössert.

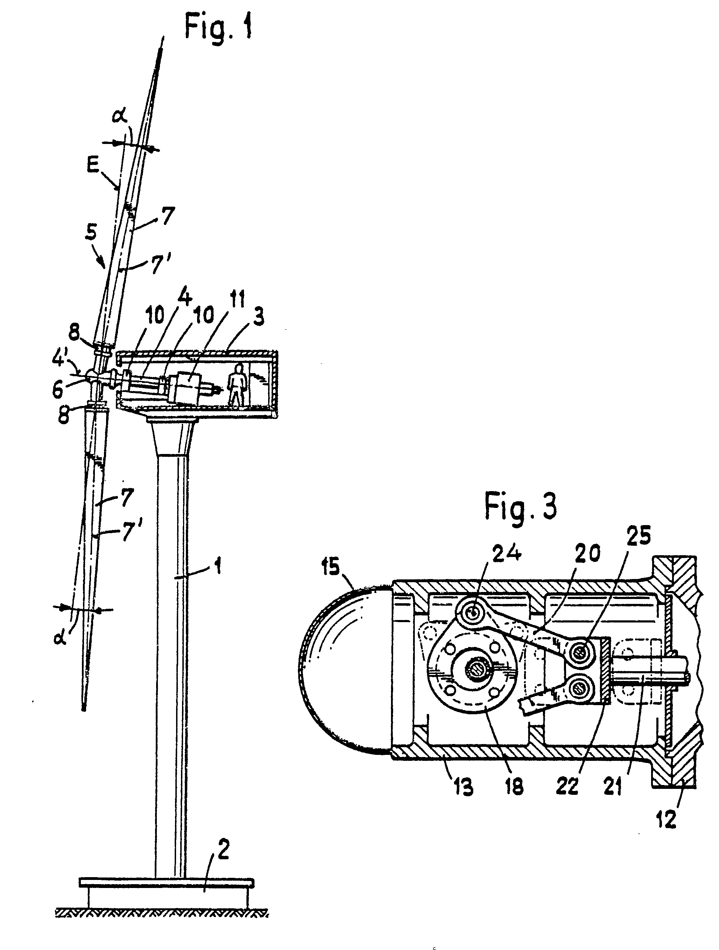

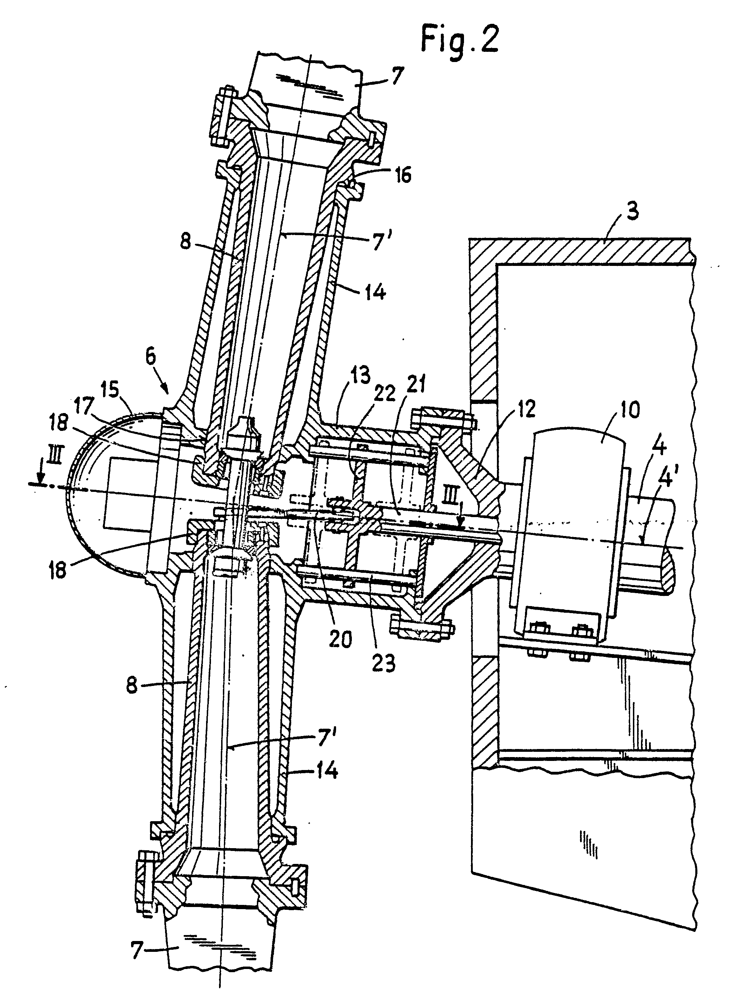

Die in der Figur 1 dargestellte Windkraftanlage enthält einen Mast 1, der in einem Sockel 2 befestigt ist und eine Kabine 3 trägt, in welcher die Welle 4 eines Rotors 5 drehbar gelagert ist. Die Kabine 3 ist ihrerseits am oberen Ende des Mastes 1 drehbar gelagert, derart, dass sie bezüglich der Windrichtung eingestellt werden kann.

Der Rotor 5 enthält eine Nabe 6, welche auf der Welle 4 befestigt ist, und in welcher zwei Flügel 7 mittels Lagerzapfen 8 drehverstellbar gelagert sind. Die Flügel 7 sind in Drehrichtung des Rotors um 180° versetzt, d.h. sie liegen beide mit ihren Achsen in einer durch die Drehachse 4' führenden Ebene. Gleichzeitig sind die Achsen 7' der Flügel 7 gegenüber einer zur Drehachse 4' des Rotors senkrechten Ebene E unter einem spitzen Winkel $\alpha$ von z.B. 4° im Sinne einer gegen die Windrichtung gerichteten Pfeilung geneigt.

Die Welle 4, deren Achse 4' die Drehachse des Rotors 5 bildet, ist in der Kabine 3 in Lagerböcken 10 gelagert und führt zu einem Getriebe 11, von welchem eine nicht dargestellte Welle zu einem ebenfalls nicht dargestellten elektrischen Generator führt, der z.B. im Sockel 2 angeordnet werden kann.

Die Figur 2 zeigt die Nabe 6 zusammen mit dem dem Rotor 5 näheren Ende der Kabine 3 in grösserem Massstab und im Schnitt.

Die Nabe 6 enthält einen an einem Flansch 12 der Welle 4 befestigten zylindrischen hohlen zentralen Nabenteil 13, von welchem ebenfalls hohle rohrförmige Arme 14 im wesentlichen in der Richtung der Achsen 7' der Flügel 7 führen. Der Nabenteil 13 ist durch eine Kuppel 15 abgeschlossen. In den Armen 14 sind mittels Lagerflächen 16, 17 die Lagerzapfen 8 gelagert.

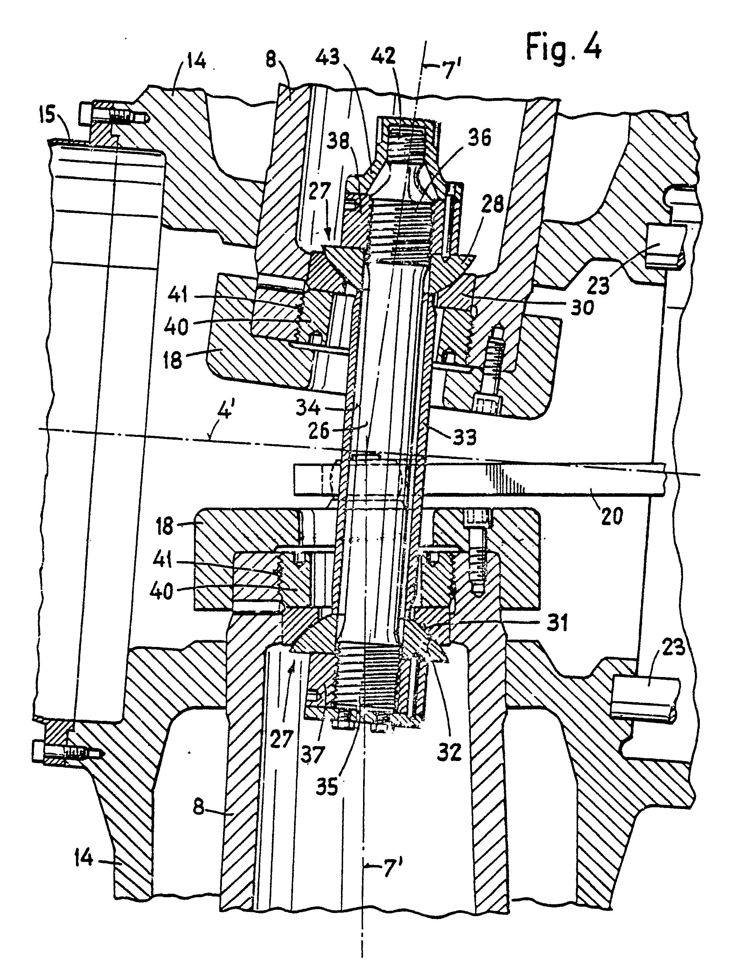

An den inneren Enden der Zapfen 8 sind Muffen 18 befestigt, welche mit in der Fig. 2 nicht sichtbaren, jedoch in den Figuren 3 und 4 dargestellten Zapfen versehen sind, an denen Stangen 20 angreifen, die von einer Verstellstange 21 führen. Die Verstellstange ist mittels einer Jochplatte 22 und Führungsstangen 23 geführt, welche gleichzeitig eine Verdrehung der Verstellstange 21 gegenüber der Nabe 6 verhindern. Die Lagerung der Stangen 20 in kugeligen Lagern der Zapfen 24 an den Muffen 18 und Zapfen 25 der Jochplatte 22 ist in der Figur 3 dargestellt.

Man ersieht daraus, dass durch eine Bewegung der Verstellstange 21 in der Richtung zur Nabe 6 oder von dieser weg die Flügel 7 verdreht werden können, wodurch ihr Anstellwinkel gegenüber der Windrichtung in gewünschter Weise eingestellt bzw. verändert werden kann.

Die Figur 4 zeigt den zentralen Teil der Nabe 6 noch weiter vergrössert. Wie aus dieser Figur ersichtlich ist, sind die der Drehachse 4' des Rotors 5 zugewandten Enden der Lagerzapfen 8 der Flügel 7 miteinander durch einen Verbindungsstab 26 verbunden, welcher zur Drehachse 4' des Rotors 5 senkrecht steht. Zwischen den Enden des Verbindungsstabes 26 und den Lagerzapfen 8 sind Lager 27 angeordnet, die jeweils einen Innenring 28 und einen Aussenring 30 aufweisen, welche mit den kugeligen Flächen 31 und 32 versehen sind.

Wie weiter aus der Figur 4 ersichtlich ist, ist der Verbindungsstab 26 von einer rohrförmigen Büchse 33 umgeben, mit deren Hilfe er durch eine Zugspannung vorgespannt ist. Der Zwischenraum 34 zwischen dem Verbindungsstab 26 und der Büchse 33 ist mit einem vor Korrosion schützenden Schmierfett aufgefüllt.

Zur Bildung der Vorspannkraft ist der Verbindungsstab 26 an seinen Enden mit Gewinden 35, 36 versehen, auf welchen Gewinderinge 37, 38 aufgeschraubt sind, welche sich über die inneren Ringe 28 der Lager 27 mit kugeligen Flächen auf den Enden der Büchse 33 abstützen.

Die mit den Innenringen 28 der Lager 27 mit kugeligen Flächen zusammenwirkenden Aussenringe 30 sind auf Gewinderingen 40 abgestützt, die in Gewindebohrungen 41 eingeschraubt sind, welche in den Lagerzapfen 8 ausgebildet sind.

Zur Bildung der Zugkraft, mit welcher der Verbindungsstab 26 vorgespannt ist, ist dieser an einem Ende mit einem Gewindezapfen 42 versehen, an welchem eine nicht dargestellte, z.B. hydraulische Spannvorrichtung eingesetzt werden kann, welche sich gegen den inneren Lagerring 28 abstützt. Nach der Bildung der Vorspannkraft kann der Gewindering 38 nachgezogen und gesichert werden. Nach der Entfernung der Spannvorrichtung kann der Gewindezapfen 42 durch eine Hutmutter 43 geschützt werden.

Wie bereits erwähnt, kann das Kalottenlager 27 mit den Gleitflächen 31 und 32 durch ein sogenanntes Pendelrollenlager ersetzt werden, welches tonnenförmige Wälzkörper aufweist, die sich auf einer kugeligen Lauffläche abwälzen.

## Patentansprüche

1. Rotor (5) einer Windkraftanlage, welcher mindestens ein Paar Flügel (7) aufweist, die mittels Lagerzapfen (8) in einer Nabe (6) drehverstellbar gelagert und in Drehrichtung des Rotors (5) um 180° versetzt sind, wobei die Lagerzapfen (8) beider Flügel (7) miteinander durch einen zur Drehachse (4') des Rotors (5) senkrechten Verbindungsstab (26) zur Aufnahme der Fliehkräfte der Flügel (7) verbunden sind, dadurch gekennzeichnet, dass zwischen den Enden des Verbindungsstabes (26) und den Lagerzapfen (8) Lager (27) mit kugeligen Flächen (31, 32) angeordnet sind, und so eine Drehung und einen bestimmten Neigungswinkel der Flügel (7) gegenüber dem Verbindungsstab (26) gestatten.

2. Rotor nach Anspruch 1, dadurch gekennzeichnet, dass der Verbindungsstab (26) von einer rohrförmigen Büchse (33) umgeben ist, mit deren Hilfe er durch eine Zugkraft vorgespannt ist.

3. Rotor nach Anspruch 2, dadurch gekennzeichnet, dass der Zwischenraum (34) zwischen dem Verbindungsstab (26) und der Büchse (33) mit vor Korrosion schützendem Schmierfett versehen ist.

4. Rotor nach Anspruch 2, dadurch gekennzeichnet, dass der Verbindungsstab (26) an seinen Enden mit Gewinden (35, 36) versehen ist, auf welchen Gewinderinge (37, 38) aufgeschraubt sind, welche sich über Ringe (28) auf den Enden der Büchse (33) abstützen, wobei die Ringe (28) als die inneren Ringe der Lager (27) mit kugeligen Flächen ausgeführt sind.

5. Rotor nach Anspruch 4, dadurch gekennzeichnet, dass die inneren Ringe (28) der Lager (27) mit Aussenringen (30) des Lagers (27) zusammenwirken, welche Aussenringe (30) auf Gewinderingen (40) abgestützt sind, die in Gewindebohrungen (41) eingeschraubt sind, welche in den Lagerzapfen (8) ausgebildet sind.

6. Rotor nach Anspruch 1, dadurch gekennzeichnet, dass die Lager (27) mit kugeligen Gleitflächen (31, 32) an Lagerringen (28, 30) versehen sind.

## Claims

1. A rotor (5) for a wind-driven power plant, which has at least a pair of blades (7) mounted by journals (8) in a hub (6) for rotational adjustment, and offset by 180° in the direction of rotation of the rotor (5), the journals (8) of both blades (7) being connected by a connecting rod (26) perpendicular to the axis of rotation (4') of the rotor (5) to absorb centrifugal forces of the blades (7), characterised in that bearings (27) with spherical surfaces (31, 32) are arranged between the ends of the connecting rod (26) and the journals (8), which permit rotation and a particular angle of inclination of the blades (7) with respect to the connecting rod (26).

2. A rotor according to Claim 1, characterised in that the connecting rod (26) is surrounded by a tubular sleeve (33) and pre-tensioned thereby.

3. A rotor according to Claim 2, characterised in that the space (34) between the connecting bar (26) and the sleeve (33) is provided with lubricating grease which protects against corrosion.

4. A rotor according to Claim 2, characterised in that the connecting rod (26) is provided at its ends with threads (35, 36) onto which threaded rings (37, 38) are screwed which are spaced from the ends of the sleeve (33) by rings (28), the rings (28) forming the inner rings of the bearings (27) with spherical surfaces.

5. A rotor according to Claim 4, characterised in that the inner rings (28) of the bearings (27) cooperate with outer rings (30) of the bearing (27), which outer rings (30) are supported on threaded rings (40) screwed into threaded holes (41) formed in the journals (8).

6. A rotor according to Claim 1, characterised in that the bearings (27) with spherical sliding surfaces (31, 32) are provided on ring bearings (28, 30).

## Revendications

1. Rotor (5) d'une éolienne, comportant au moins une paire de pales (7), qui sont logées en rotation au moyen de cônes de portée (8) dans un moyeu (6) et décalées de 180° dans le sens de rotation du rotor (5), les cônes de portée (8) des deux pales (7) étant reliés entre eux par une barre de liaison (26), qui est perpendiculaire à l'axe de rotation (4') du rotor (5) et qui est destinée à absorber les forces centrifuges des pales (7), caractérisé en ce qu'entre les extrémités de la barre de liaison (26) et les cônes de portée (8) sont disposés des paliers (27) à surfaces sphériques (31, 32), qui permettent ainsi une rotation et un angle d'inclinaison déterminé des pales (7) par rapport à la barre de liaison (26).

2. Rotor suivant la revendication 1, caractérisé en ce que la barre de liaison (26) est entourée par un manchon tubulaire (33), à l'aide duquel elle est préchargée par une force de traction.

3. Rotor suivant la revendication 2, caractérisé en ce que l'espace intermédiaire (34) entre la barre de liaison (26) et le manchon (33) est garni d'une graisse anti-corrosion.

4. Rotor suivant la renvendication 2, caractérisé en ce que la barre de liaison (26) est munie, à ses extrémités, de filetages (35, 36), sur lesquels sont vissées des bagues filetées (37, 38), qui s'appuient sur les extrémités du manchon (33) par l'intermédiaire de bagues (28), qui, en tant que bagues intérieures des paliers (27), comportent des surfaces sphériques.

5. Rotor suivant la renvendication 4, caractérisé en ce que les bagues intérieures (28) des paliers (27) coopèrent avec des bagues extérieures (30) du palier (27), ces bagues extérieures (30) s'appuyant sur des bagues filetées (40), vissées dans des taraudages (41), taillés dans les cônes de portée (8).

6. Rotor suivant la revendication 1, caractérisé en ce que les paliers (27) sont munis de surfaces de glissement sphériques (31, 32) sur leurs bagues intérieures (28, 30).

# Fig. 1

# Fig. 3

# Fig.2

Fig. 4